# EUROPEAN PATENT APPLICATION

(11) **EP 4 310 413 A1**
(43) Date of publication of application: **24.01.2024**
(21) Application number: 22186021.6
(22) Date of filing: 20.07.2022
(51) Int. Cl.: F24T 10/17

(54) **COLLECTOR AND USE THEROF**

(71) Applicant: Muovitech AB, 50730 Brämhult (SE)
(72) Inventor: Mehrjerdi, Adib Kalantar, 507 30 BRÄMHULT (SE)
(74) Representative: AWA Sweden AB

(57) **Abstract**

A geothermal pipe collector (1) for transporting a fluid for heat exchange with the ground surrounding a borehole. The geothermal pipe collector comprises an outer pipe (120) comprising a fiber reinforced thermoset polymer material, and an inner pipe (110) being made from a material comprising a second polymer material, different from the fiber reinforced thermoset polymer material. The inner pipe (110) is co-axially arranged in the outer pipe (120). The average wall thickness (T1) of the inner pipe 110 is more than 1,1, times the average wall thickness (T2) of the outer pipe 120, and the outer pipe 120 is adapted to exchange heat with the ground surrounding the borehole.

## Description

### TECHNICAL FIELD

The present application relates to pipe collectors for geothermal heat exchange, geothermal pipe collector systems and methods for installing geothermal pipe collectors and geothermal pipe collector systems.

### BACKGROUND OF THE INVENTION

Geothermal energy is energy stored as heat in the ground. This energy may originate from the hot core of the earth or may be heat generated by the earth surface being exposed to infrared radiation from the sun. Most geothermal installations today use the second category of geothermal energy, i.e. solar energy stored as heat in e.g. water, ground or bedrock.

In a geothermal energy system using circulating fluid, the heat is extracted from the ground (e.g. water or bedrock) using a geothermal pipe collector. In the geothermal pipe collector, the fluid, known as heat transfer medium or heat transfer liquid is circulated such that fluid heated by the geothermal energy is extracted in one end of the geothermal pipe collector, the cooled fluid is then returned in the other end of the geothermal pipe collector such that a closed system is created.

Examples of geothermal energy systems are ground surface heat systems, sea heat systems and borehole heat systems. In ground surface heat systems, a several hundred meters long geothermal pipe collector is buried in the ground at a frost proof depth. In a sea heat system, a similar pipe collector is placed in the sea water and/or on/in the sea bed.

In a borehole heat system, a geothermal pipe collector having two fluid conduits are placed in the bore hole, one for transporting fluid upwards and one for transporting it downwards. Temperature differences may hereby be used for heating or cooling e.g. a building. There is substantial loss of energy in the pipes used in state of the art system, and therefore there is a general need for improving the energy efficiency of geothermal pipe collectors for increasing the efficiency in the heat pump system.

### SUMMARY OF THE INVENTION

A geothermal pipe collector for transporting a fluid for heat exchange with the ground surrounding a borehole is provided. The geothermal pipe collector comprises an outer pipe comprising a fiber reinforced thermoset polymer material, and an inner pipe made from a material comprising a second polymer material, different from the fiber reinforced thermoset polymer material. The inner pipe is co-axially arranged in the outer pipe, such that a central longitudinal lumen for transporting the fluid in a first direction is formed in the inner pipe, and an intermediate longitudinal lumen for transporting the fluid in a second direction is formed between the inner and outer pipes. The average wall thickness of the inner pipe is more than 1,1 times the average wall thickness of the outer pipe. The outer pipe is adapted to exchange heat with the ground surrounding the borehole, when in use.

Having an outer pipe made from a fiber reinforced thermoset polymer material enables the outer pipe to be made relatively thin, which reduces the thermal resistance of the outer pipe which increases the heat exchange between the bore hole and the fluid on the inside of the wall of the outer pipe. Also, having an inner pipe with an average wall thickness being thicker than the average wall thickness of the outer pipe increases the thermal resistance of the inner pipe which reduces the heat transfer between the fluid transported in the inner pipe and the fluid transported between the outer and inner pipes, which increases the heat exchange efficiency of the geothermal pipe collector.

According to one embodiment, the fiber reinforced thermoset polymer material comprises an epoxy material. Epoxy material is relatively durable and have a relatively low thermal resistance. Epoxy material also maintains its mechanical properties also at relatively high temperatures for geothermal applications, such as temperatures exceeding 80° C.

According to one embodiment, the fiber reinforced thermoset polymer material comprises a polyester resin. Polyester resin is relatively durable and have a relatively low thermal resistance.

According to one embodiment, the fiber reinforced thermoset polymer material comprises glass fibers. Glass fiber enforcement increases the mechanical properties, tensile strength, stiffness and durability of the thermoset polymer material and enables a reduction of the wall thickness and thereby the thermal resistance.

According to one embodiment, the fiber reinforced thermoset polymer material comprises carbon fibers. Carbon fiber enforcement increases the mechanical properties, tensile strength, stiffness and durability of the thermoset polymer material and further reduces the wall thickness and thermal resistance.

According to one embodiment, the second polymer material is more elastic than the fiber reinforced thermoset polymer material.

According to one embodiment, the second polymer material comprises a PVC-based material. PVC-based material has relatively low thermal conductivity, i.e. high thermal resistance compared to PE-based materials.

According to one embodiment, the second polymer material comprises a natural rubber-based material, and/or a synthetic rubber-based material. Rubber-based materials have the advantage that they maintain their mechanical properties also when exposed to temperatures exceeding 80°C, which enables the use of the geothermal pipe collector also in applications in which fluid temperatures above 80°C is desired.

According to one embodiment, the outer pipe has lower thermal resistance than the inner pipe, which increases the heat exchange between the bore hole and the fluid in the geothermal pipe collector as well as decreases the heat exchange between the fluid in the inner and the fluid between the inner and outer pipe.

According to one embodiment, the inner pipe comprises more gas measured in volume percentage than the material of the outer pipe. Gas is generally a poor thermal conductor, which means that the introduction of gas in the material of the inner pipe increases the thermal resistance of the inner pipe which reduces the heat exchange between the fluid in the inner and the fluid between the inner and outer pipe.

According to one embodiment, the material of the inner pipe comprises a plurality of volumes of gas enclosed by an enclosing material, which in turn is enclosed by the second polymer material, for increasing the thermal resistance of the second polymer material. The enclosing material is harder than the second polymer material. Having the gas being enclosed by a material which is harder than the second polymer material enables the plurality of volumes of gas to be mixed into the second polymer material, such that the plurality of volumes of gas can be evenly distributed in the second polymer material which optimizes the increase of the thermal resistance of the second polymer material. According to one embodiment, the material which is harder than the second polymer material is glass.

According to one embodiment, the plurality of volumes of gas enclosed by an enclosing material makes up at least 3 volume percent of the material of the inner pipe.

According to one embodiment, the plurality of volumes of gas enclosed by an enclosing material makes up at least 5 volume percent of the material of the inner pipe.

According to one embodiment, the plurality of volumes of gas enclosed by an enclosing material makes up at least 10 volume percent of the material of the inner pipe.

According to one embodiment, the inner pipe has a helical groove on the outer surface, facing the outer pipe, for creating a turbulent flow of the fluid between the inner and outer pipes, for increasing the heat exchange between the fluid and the outer pipe. Making the helical groove on the outer surface of the inner pipe, instead of on the inner surface of the outer pipe is advantageous as the outer pipe then does not need to be made thicker to compensate for the material being removed when making the helical groove, which minimizes the thermal resistance of the outer pipe.

According to one embodiment, the central longitudinal lumen has a cross-sectional area in a plane perpendicular to the length extension of the geothermal pipe collector being larger than a cross-sectional area of the intermediate longitudinal lumen in the same plane. The central longitudinal lumen may have a cross-sectional area in a plane perpendicular to the length extension of the geothermal pipe collector being more than 1,1 times the size of the cross-sectional area of the intermediate longitudinal lumen in the same plane.

A geothermal pipe collector system is further provided. The geothermal pipe collector system comprises the geothermal pipe collector according to any one of the embodiments above, and the fluid for circulation in the geothermal pipe collector. The fluid in the geothermal pipe collector system has a relative density of above 1,10 (relative to the density of water which is 1) for supporting the wall of the outer pipe of the polymer geothermal collector against the pressure from the ground water surrounding the polymer geothermal collector, when the polymer geothermal collector has been installed in the well.

A use of a plurality of geothermal pipe collectors according to any one of the embodiments herein, for forming an assembled coaxial geothermal pipe collector for transporting the fluid is further provided. In one embodiment, the assembled coaxial geothermal pipe collector has a total length of more than 200 meters. In one embodiment, the assembled coaxial geothermal pipe collector has a total length of more than 300 meters. In one embodiment, the assembled coaxial geothermal pipe collector has a total length of more than 400 meters. In one embodiment, the assembled coaxial geothermal pipe collector has a total length of more than 600 meters. In one embodiment, the assembled coaxial geothermal pipe collector has a total length of more than 800 meters.

A method for installing a coaxial geothermal pipe collector comprising a plurality of outer pipes according to any one of the embodiments herein is further provided. The method comprises providing a first outer pipe into a bore hole and bringing a second outer pipe in abutment with the first outer pipe. The method then comprises rotating the second outer pipe relative the first outer pipe, so as to couple said first outer pipe to said second outer pipe by means of two matching threads. The method further comprises providing an inner pipe into the outer pipe placed in the bore hole and providing a second inner pipe in abutment with the first inner pipe into the outer pipe placed in the bore hole. The method then comprises connecting the second inner pipe to the first inner pipe for forming the coaxial collector.

According to one embodiment, the step of rotating the second outer pipe relative the first outer pipe, so as to couple said first outer pipe to said second outer pipe is preceded by the step of applying an adhesive to at least one of the first and second outer pipes, such that the adhesive assists in the coupling of the second outer pipe to the first outer pipe.

According to one embodiment, the step of connecting the second inner pipe to the first inner pipe comprises rotating the second inner pipe relative the first inner pipe, so as to couple the first inner pipe to the second inner pipe by means of two matching threads.

In yet one embodiment of the invention, the inner pipe has thicker wall than the outer pipe, preferably 10% thicker, more preferably 20% thicker and even more preferably 30% thicker. Hereby, the fluid flowing downwards inside the inner pipe may be more isolated from the fluid flowing between the inner and outer pipe so as to obtain a more efficient thermal exchange with the surrounding ground.

### BRIEF DESCRIPTION OF THE DRAWINGS

The various aspects of the invention, including its particular features and advantages, will be readily understood from the following detailed description and the accompanying drawings, in which:
Fig. 1 illustrates a coaxial geothermal pipe collector when placed in a bore hole,
Fig. 2 illustrates a cross-section of a coaxial geothermal pipe collector according to one embodiment,
Fig. 3A illustrates a coaxial geothermal pipe collector according to one embodiment, in a perspective view,
Fig. 3B illustrates a wall portion of an inner pipe of a coaxial geothermal pipe collector, in a perspective view,
Fig. 3C illustrates a cross-section of a portion of a wall of an inner pipe of a geothermal pipe collector according to one embodiment,
Fig. 3D illustrates a cross-section of a portion of a wall of an inner pipe of a geothermal pipe collector according to one embodiment,
Fig. 4A illustrates a cross-section of a coaxial geothermal pipe collector according to one embodiment,
Fig. 4B illustrates a cross-section of a coaxial geothermal pipe collector according to one embodiment,
Fig 5, is a perspective illustration of two outer pipes of a coaxial geothermal pipe collector when being assembled by means of a thread,
Fig 6 illustrates a building with a heat exchange system coupled to a coaxial collector system.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the figures and the following examples, the collector pipes are primarily described as individual pipes or mounted together to one other collector pipe. In a collector system there will of course be a plurality of pipes mounted together to form a long geothermal pipe collector, between 200-1000 meters long. That means that if the pipes are 5 meters long there may be 40-200 pipes mounted together in each geothermal pipe collector.

Moreover, in general only sections of the pipe lengths are illustrated in the figures. The lengths are however longer in reality, but in order to illustrate the technical features of e.g. the helical pattern and dimensions etc. only a section of the pipe lengths are illustrated.

In a borehole heat system, a geothermal pipe collector having two fluid conduits are placed in the bore hole, such that fluid can be pumped into the borehole though a first of the two fluid conduits and out from the borehole through a second of the two fluid conduits. In many applications, polymer pipe collectors are used. However, polymer materials are generally relatively good thermal insulators, i.e., have relatively low thermal conductivity and thereby high thermal resistance in comparison with for example metals. This is a drawback when polymer materials are used in heat exchange applications in which heat is to be transferred over the material. For the purpose of reducing the thermal resistance in a geothermal pipe collector, the wall thickness may be decreased. However, decreasing the wall thickness affects the mechanical properties of the collector, which may be a disadvantage for fulfilling the requirements of collector standards and for the handling, installation and operation of the geothermal pipe collector.

When making deep wells or boreholes (the terms will be used as analogues as a drilled borehole forms an energy well when being equipped with a geothermal collector), the pressure-drop in the pipe increases with the depth, which means that a pump needs to work harder to circulate the fluid. This means that the pump consumes more energy, which lowers the efficiency of the heat pump system. The pressure drop is also affected by the available lumen of the collector, i.e. if the fluid conduit is very narrow, the flow resistance will increase and with that the pressure drop over the collector. This means that, for the same outer dimensions, thicker walls of the collector lead to a narrower fluid conduit and more pressure drop.

As heated fluid (or cooled fluid in use cases in which cooling is extracted from the well) is to be transported out from the well, whereas cooler fluid (or warmer fluid in cooling applications) is to be transported into the well, it is a disadvantage when the fluids in the different portions of the collector are affected by each other i.e. such that the heated fluid is cooled by the proximity to the cooler fluid in the bore hole. One way to avoid this thermic contamination is to increase the speed of the flowing fluid, such that the fluids of different temperatures spend less time in proximity of each other. However, the increased flow rate further increases the pressure drop and also reduces the available time that the fluid has for the heat exchange with the bore hole.

Increasing the cross-sectional area of the collector offsets the increasing pressure drop, as the contact area between the fluid and the inner wall of the collector, relative to the volume of fluid transported, is reduced. However, to be able to fit larger collectors in a borehole, the diameter of the borehole needs to be increased which increase the drilling cost.

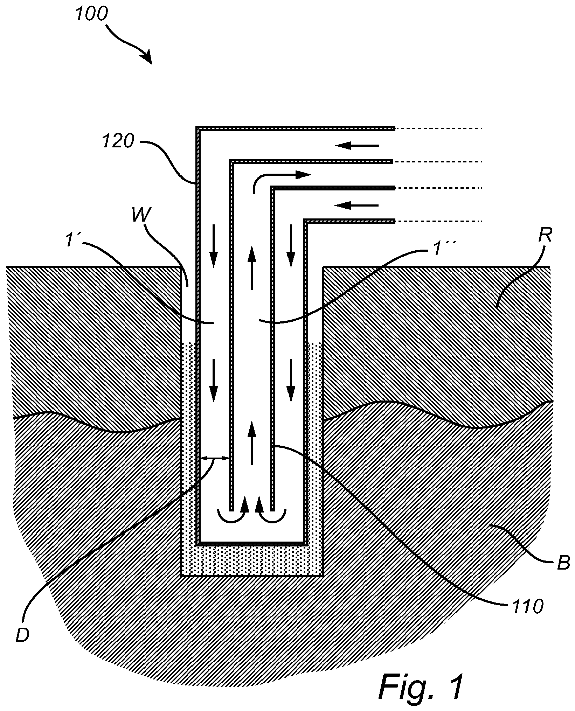

Fig. 1 shows a system for extracting geothermal energy from a well **W,** in which a co-axial geothermal pipe collector 100 for extracting geothermal energy from the well **W** is used. In fig. 1, the co-axial geothermal pipe collector 100 is placed in the well W or borehole for enabling circulation of a fluid in the co-axial geothermal pipe collector 100, for performing heat exchange between the fluid in the collector 100 and the bedrock **B**. The co-axial geothermal pipe collector 100 comprises a first fluid conduit 1' for transporting the fluid out from the well **W** and a second fluid conduit 1" for transporting fluid into the well **W**. To get a good heat exchange with the ground, and thereby extract a lot of energy, it is important that the co-axial geothermal pipe collector 100 is placed in connection with a material of the ground having relatively high density and thereby storing a lot of energy per unit of volume. The sought-after material in the ground is usually the bedrock **B**. Bedrock **B** is a solid rock. Sometimes, the bedrock **B** is exposed, but in most cases the bedrock lies under looser surface material. The looser surface material is known as regolith **R** and may be composed of broken and weathered rock material, such as soil or subsoil. To reach the bedrock **B** it may be necessary to drill through a relatively deep layer of regolith **R** which may mean that the well **W** or borehole needs to be made deep for the co-axial geothermal pipe collector 1 to be placed in connection with the bedrock **B** over a sufficiently long distance to get a sufficient heat exchange.

The co-axial geothermal pipe collector 100 of fig. 1 comprises an outer pipe 120 for transporting fluid out from into the well **W**. The outer pipe 120 is configured to be in connection with the inner surface of the bore hole and comprises a fiber reinforced thermoset polymer material. The co-axial geothermal pipe collector 100 further comprises an inner pipe 110 for transporting fluid into the well **W**. The inner surface is made from a material comprising a second polymer material, different from the fiber reinforced thermoset polymer material. The inner pipe 110 is co-axially arranged in the outer pipe 120, at a distance **D** from the outer pipe 120. The inner pipe 110 has an average wall thickness being thicker than the average wall thickness of the outer pipe 120, more specifically, the average wall thickness of the inner pipe 110 is more than 1,1, times the average wall thickness of the outer pipe 120. In alternative embodiments, the average wall thickness of the inner pipe 110 is more than 1,2, times the average wall thickness of the outer pipe 120, or the average wall thickness of the inner pipe 110 is more than 1,3, times the average wall thickness of the outer pipe 120. The average wall thickness being defined as the average wall thickness of the portion of the geothermal pipe collector 100 placed in the well.

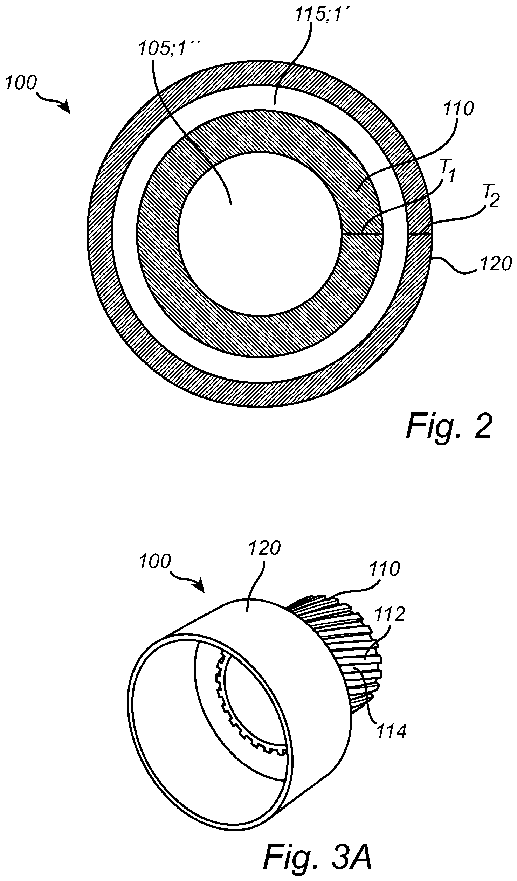

Fig. 2 shows a cross-sectional view of the geothermal pipe collector 100, looking along the central longitudinal axis of the geothermal pipe collector 100. In fig. 2, a co-axial geothermal pipe collector 100 is illustrated, where the inner pipe 110 has a central longitudinal lumen 105 forming the second conduit 1" in which thermal fluid can flow. In the embodiment shown in fig. 2, the fluid flows in an upwards direction in the first conduit 1', and in a downwards direction in the second conduit 1". The advantage of this flow direction is that the pressure will be somewhat higher in the second conduit 1" than in the first conduit 1' (due to the pressure drop over the length of the geothermal pipe collector 100). This higher pressure will support the inner pipe 110 which is of particular importance when the inner pipe is made from a more resilient rubber-based material, such as EPDM. The support will maintain the circular shape of the inner pipe 110 and prevent it from altering shape or collapsing, which would affect the flow in the geothermal pipe collector 100.

However, in some embodiments, it is possible that the direction would either be the opposite, or even that the direction could change depending on if the system is used for storing heat or retrieving heat from a bore hole at the time. The cross-sectional area of the intermediate longitudinal lumen 115, i.e. the cross sectional area of the lumen of the inner pipe minus the cross-sectional area of the outer pipe, is preferably about the same as the cross-sectional area of the central longitudinal lumen 105 (i.e. the lumen of the inner pipe), as this will allow the same fluid flow velocity, i.e. flow rate, in both directions, which will minimize the pressure drop.

It however in the alternative possible to have a larger cross-sectional area of the central longitudinal lumen 105, as the fluid will then flow slower in the central longitudinal lumen 105, which leads to a more laminar flow. Just as the increased turbulence increases the heat exchange between the wall and the fluid flowing in the lumen, a more laminar flow will decrease the heat exchange between the wall and the fluid flowing in the lumen. In the embodiment shown in fig. 2, decreased turbulence in the fluid flowing in the central longitudinal lumen 105 will reduce the heat transfer over the wall of the inner pipe and thus the heat exchange between the fluid in the central longitudinal lumen 105 and the fluid in the intermediate longitudinal lumen 115, which will increase the efficiency of the geothermal pipe collector 100. In the embodiment shown in fig. 2, the central longitudinal lumen 105 has a cross-sectional area in a plane perpendicular to the central longitudinal axis of the geothermal pipe collector 100 being 1,1 times as large as a cross-sectional area of the intermediate longitudinal lumen 115 in the same plane.

The outer pipe 120 is made from a fiber reinforced thermoset polymer material. Fiber reinforced thermoset polymer materials are very durable and as such the outer pipe 120 can be made relatively thin. In the embodiment shown in fig. 2, the outer pipe has an average wall thickness T2 in the range 2mm - 6mm, or more preferably 2mm - 4mm. Having a relatively thin average wall thickness T2 reduces the thermal resistance of the outer pipe 120 which increases the heat exchange between the bore hole and the fluid on the inside of the wall of the outer pipe 120. The fiber reinforced thermoset polymer material could comprise a cured epoxy or polyester resin, which apart from being durable also has the advantage that it maintains its mechanical properties even under relatively high temperatures (for geothermal applications) such as temperatures above 80°C. Cured epoxy resin have a thermal conductivity in the range 0,17 - 0,22 W/mK, more specifically about 0,19 W/mK. The fiber reinforced thermoset polymer material may further comprise glass fibers of carbon fibers. Glass fibers and carbon fibers increase the mechanical properties, tensile strength, stiffness and durability of the thermoset polymer material and enables a reduction of the wall thickness and thereby the thermal resistance.

The inner pipe 110 is made from a second polymer material, which is different from the fiber reinforced thermoset polymer material. The polymer material of the inner pipe 110 may be a polymer material having a higher thermal resistance than the fiber reinforced thermoset polymer material to provide better insulation between the fluid in the intermediate longitudinal lumen 115 and the fluid in the central longitudinal lumen 105. The polymer material of the inner pipe 110 may be a polymer material having a 10% higher thermal resistance than the fiber reinforced thermoset polymer material, or a 20% higher thermal resistance than the fiber reinforced thermoset polymer material, or a 30% higher thermal resistance than the fiber reinforced thermoset polymer material. The inner pipe 110 has an average wall thickness T1 being thicker than the average wall thickness T2 of the outer pipe 120 which increases the thermal resistance of the inner pipe 110 which enables the thermal resistance of the inner pipe to be higher than the thermal resistance of the outer pipe 120, which reduces the heat transfer between the fluid transported in the inner pipe 110 and the fluid transported in the intermediate longitudinal lumen 115 between the outer and inner pipes 120,110, which in turn increases the heat exchange efficiency of the geothermal pipe collector 100.

In fig. 2, the second polymer material is more elastic than the fiber reinforced thermoset polymer material. The second polymer material may be more than 10% more elastic than the fiber reinforced thermoset polymer material, or 20% more elastic than the fiber reinforced thermoset polymer material, or 30% more elastic than the fiber reinforced thermoset polymer material. This makes handling of the inner pipe 110 easier, for example by the inner pipe 110 being possible to coil, such that the entire inner pipe can be manufactured and handled in a single length, which would remove the need for assembly of the inner pipe 110 when the geothermal pipe collector 100 is installed. The second polymer material could for example comprise a PVC-based material. PVC-based material has relatively low thermal conductivity, i.e. high thermal resistance compared to PE-based materials. The general properties of PVC is a specific weight in the range 1,3 - 1,5 g/cm3, more specifically about 1,4 g/cm3, a modulus of elasticity in the range 2 - 7GPa, more specifically about 3GPa and a thermal conductivity in the range 0,12 - 0,25 W/mK, more specifically about 0,20 W/mK.

In the alternative, the second polymer material may comprise a natural rubber-based material, and/or a synthetic rubber-based material. Rubber-based materials have the advantage that they maintain their mechanical properties also when exposed to temperatures exceeding 80°C, which enables the use of the geothermal pipe collector 100 also in applications in which fluid temperatures above 80°C is desired. Such applications could for example be storage of waste heat in the ground during the warmer parts of the year, for use during the cooler parts of the year. Synthetic rubber, specifically EPDM, has a thermal conductivity in the range 0,25 - 0,31 W/mK, more specifically about 0,29 W/mK. Synthetic rubber, or specifically EPDM, has a modulus of elasticity of about 6MPa which enables an inner pipe made of EPDM to be coiled.

In the embodiment shown in fig. 2 the inner pipe 110 has an average wall thickness T1 which is thicker than the average wall thickness T2 of the outer pipe 120. In the embodiment shown in fig. 2, the inner pipe 110 has an average wall thickness T1 being more than 10% thicker than the average wall thickness T2 of the outer pipe 120, more preferably more than 20% thicker than the average wall thickness T2 of the outer pipe 120, and even more preferably more than 30% thicker than the average wall thickness T2 of the outer pipe 120.

In the embodiment shown in fig. 2, the average wall thickness T2 of the outer pipe 120 is less than 3mm, preferably in the range 2mm - 4mm.

In the embodiment shown in fig. 2, the average wall thickness T1 of the inner pipe 110 is preferably in the range 3mm - 7mm, more preferably in the range 4mm - 6mm. In the embodiment of fig. 2, the inner pipe 110 has an average wall thickness T1 of more than 4,5mm, and the outer pipe 120 has an average wall thickness T2 of less than 3,5mm.

A further advantage with keeping the average wall thickness relatively low is that, for the same size of bore hole, an increasing wall thickness leads to a decrees of the total lumen cross-sectional area, such that the area available for fluid conduits becomes less, which increases the pressure drop in the system provided that the same amount of fluid is to be circulated.

The outer dimensions of the inner and outer pipes 110,120 may vary depending on the capacity of the coaxial collector. Typically, the outer pipe 120 may have an outer diameter ranging from 60 - 200mm, preferably from 75 - 120mm, more preferably from 80 - 115mm and most preferably from 85 - 95mm. Typically, the inner pipe 110 has an outer diameter ranging from 30 - 130mm, preferably from 40 - 70mm, more preferably from 30 - 60mm.

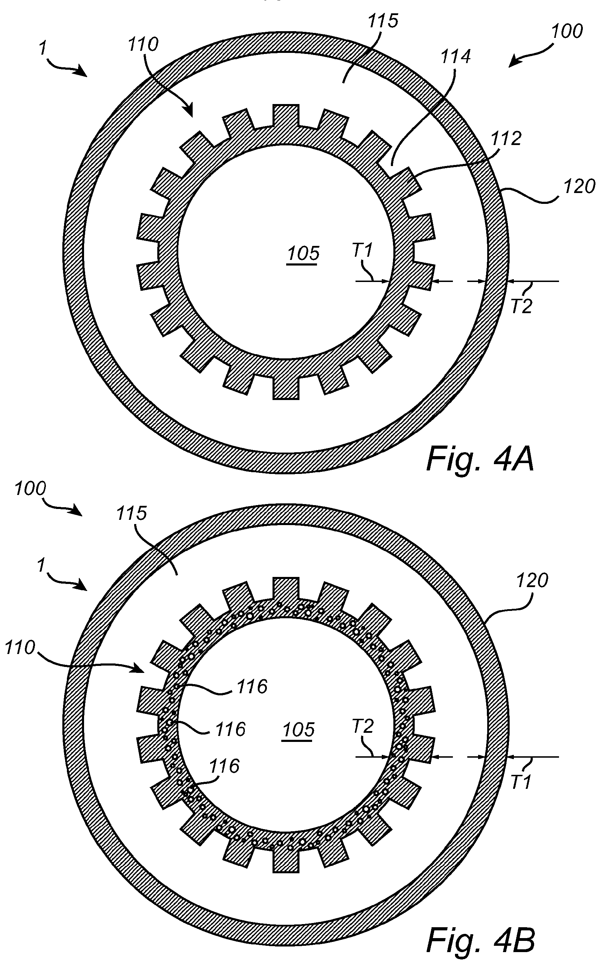

The polymer materials of the inner and outer pipes 110,120 may comprise one or several fillers, such as carbon black or another paracrystalline carbon. In the embodiment shown in fig. 2, the polymer material of the inner pipe 110 comprises carbon black in the range 10% - 20%, preferably less than 15%. Carbon black has a specific weight of 1,8 - 2,1 g/cm3 and the addition of carbon black thus increase the specific weight of the collector, which would be an advantage when the collector is made from a material enclosing gas, such further described with reference to fig. 4B. The addition of Carbon Black also increases the durability of the polymer material and provides protection against UV-radiation. The plastic material (including the major polymer component (such as PVC or EPDM), fillers and additives) that forms of the inner and/or outer pipes 110,120 may have a specific weight being more than 3% higher than the major polymer component of the plastic material, or may have a specific weight being more than 5% higher than the major polymer component, or may have a specific weight being more than 7% higher than the major polymer component.

In the embodiment shown in fig. 2, the outer pipe 120 has a lower thermal resistance than the inner pipe 110. The thermal resistance of the outer pipe 120 is preferably less than 90% of the thermal resistance of the inner pipe 110, more preferably less than 80% of the thermal resistance of the inner pipe 110, and even more preferably less than 70% of the thermal resistance of the inner pipe 110. The thermal resistance is a result of a combination of the properties of the material and the average wall thickness.

Fig. 3A illustrates a perspective view of a section of a geothermal pipe collector 100 comprising an inner pipe 110 and outer pipe 120 according to one embodiment. The inner and outer pipes 110,120 are axially displaced for clarity reasons. In a real application, the inner and outer pipes 110,120 will obviously extend axially aligned. The inner pipe 110 is coaxially arranged inside the outer pipe 120. In figure 3a the inner pipe 110 comprises a helical pattern on its outside surface. The pattern comprises helical projections 112 and intermediary helical grooves 114. The purpose of this helical pattern 112,114 is mainly to obtain a turbulent flow of a fluid flowing in the intermediate longitudinal lumen 115. The turbulent flow increases the heat exchange as the fluid is constantly mixed which avoids layers of different temperatures in the fluid flow. In the opposite way, a laminar flow creates layers of different temperatures which reduces the heat transfer. Moreover, the turbulent flow may have the advantage that build-up of deposition on the inside of the pipe can be avoided. By avoiding build-ups of depositions decreased efficiency over time is avoided.

The advantage in making the helical patters on the outside of the inner pipe 110 instead of on the inside of the outer pipe 120, is that the additional material needed to enable the creation of the helical pattern is added only to the inner pipe 110, which means that the average wall thickness of the outer pipe 120 can be kept as thin as possible.

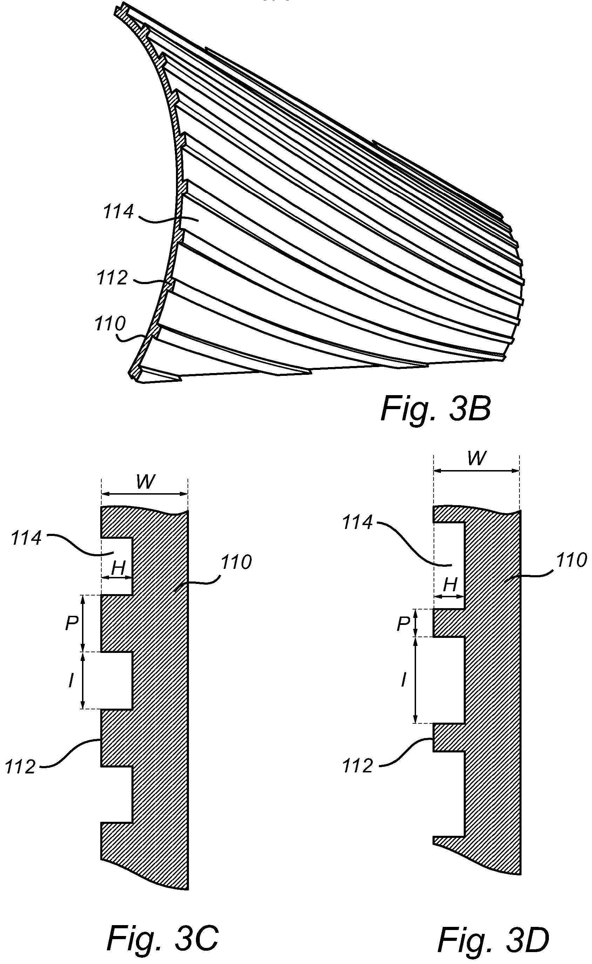

Fig. 3B shows a section of the inner pipe 110 of fig. 3A with the helical pattern built up from the protrusions 112 and grooves 114 on its outer surface. The protrusions 112 and the grooves 114 may vary as described in relation to figs. 3D and 3E, both in terms of height, numbers, distribution and rotation ratio. From fig. 3B it is clear that the helical pattern rotates on the outside of the inner pipe 110. In a longer section of the inner pipe 110, the pattern may conclude an entire 360 degrees rotation every 50 cm, ever meter, every 2^{nd} meter, every 4^{th} meter or every 6^{th} meter

Figs. 3C and 3D shows two alternative embodiments of the grooved outer surfaces of the inner pipe 110. The grooves 114 have a rectangular shape. In this illustrated embodiment, all of the grooves 114 have a rectangular shape with a width **I** and a depth corresponding to the height **H** of the protrusions 112. The grooves 114 may be uniform in shape, but the shape could vary throughout the cross-section of the inner pipe 110. The grooves 114 could also have other shapes, such as triangular, rounded, half-moon shape (not shown) or any other form. Further the width **P** of the protrusions 112 are also illustrated in the figure.

In the embodiment shown in figure 3C, the width **I** of the indentations are wider with respect to the width **P** of the protrusions 112. It is however equally plausible that the relationship is reversed. It is also plausible that the widths **P** and **I** are identical. In both the embodiment of fig. 3C and the embodiment of fig. 3D, the height **H** of the protrusions 112 (which is equal to the depth of the grooves 114) is preferably between 0,01 and 0,2 times the average wall thickness **W** of the inner pipe 110. The height **H** of the protrusions 112 is preferably between 0,001 and 0,05 times the diameter of the inner pipe 110. It is however plausible that the height **H** of the protrusions 112 is between 0,005 and 0,01 times the diameter of the inner pipe 110.

In fig. 3C, width **I** of the grooves 114 is equal to the width **P** of the protrusions 112. In fig. 3D however, the width **I** of the grooves 114 is wider than the width **P** of the protrusions 112. It is equally plausible however, that the width **P** of the protrusions 112 would be wider than the width **I** of the grooves 112. This also applies to the ratio on any helical pattern.

The width **I** of the grooves and the width **P** of the protrusions is preferably between 0,1 and 5 times the average wall thickness **W** of the inner pipe 110. The height **H** of the indentations and/or protrusions can be varied but can typically be within the range of 0.1 - 2 mm depending on the size of the pipes and the average wall thickness. Preferably the height **H** is between 0.2 and 1 mm.

Fig. 4A shows a cross-sectional view of the geothermal pipe collector 100 according to the embodiment shown in figs. 3A and 3B. The outer pipe 120 is made from a fiber reinforced thermoset polymer material and the inner pipe 110 is made from a second polymer material, which is different from the fiber reinforced thermoset polymer material. The polymer material of the inner pipe 110 may be a polymer material having a higher thermal resistance than the fiber reinforced thermoset polymer material to provide better insulation between the fluids in the intermediate longitudinal lumen 115 and the central longitudinal lumen 105. In the embodiment of fig. 4A, the inner pipe 110 has an average wall thickness T1 being thicker than the average wall thickness T2 of the outer pipe 120 which enables the thermal resistance of the inner pipe 110 to be higher than the thermal resistance of the outer pipe 120, which reduces the heat transfer between the fluid transported in the inner pipe 110 and the fluid transported between the outer and inner pipes 120,110, which in turn increases the heat exchange efficiency of the geothermal pipe collector 100.

The inner pipe 110 has a helical groove 114 on the outer surface, facing the outer pipe 120 for creating a turbulent flow of the fluid in the intermediate longitudinal lumen 115, between the inner and outer pipes 110, 120. The turbulent flow increases the heat exchange between the fluid and the wall of the outer pipe 120 which thus increases the heat exchange between the inside of the bore hole and the fluid in the geothermal pipe collector 100.

According to the embodiment shown in figure 4A, the grooves 114 are placed equidistantly across the cross-section. It is however plausible that the grooves 114 are placed at varying intervals across the cross-section (such as for example shown in fig. 3D). In the embodiment shown in fig. 4A, the groove 114 runes continuously along the entire length of the inner pipe 110. However, in alternative embodiments it is equally conceivable that different sections of the pipe in the longitudinal direction could have different number of grooves 114. Some sections of the pipe may even be flat and contain no grooves at all. The wording "grooves and protrusions" are to be understood as that the pipe should have two different thicknesses. The word "protrusion" is not limited to that a material should be added to the wall, nor is the wording groove limited to that a material needs to be removed from the wall. The wording is simply used to describe a relative thickness of the pipe wall at the groove and at the protrusion.

Fig. 4B shows an embodiment of the geothermal pipe collector 100 similar to the embodiment shown in fig. 4A, the difference being that the material of the inner pipe 110 comprises more gas measured in volume percentage than the material of the outer pipe 120. More specifically, the material of the inner pipe 110 comprises a plurality of volumes of gas 116 enclosed by an enclosing material, which in turn is enclosed by the second polymer material of the inner pipe 110, for increasing the thermal resistance of the second polymer material. In the embodiment of fig. 4A, the enclosing material is glass, which is harder and heavier than the second polymer material. The plurality of volumes of gas enclosed by an enclosing material, such as glass, makes up at least 3 volume percent of the material of the inner pipe, more preferably at least 5 volume percent of the material of the inner pipe, and even more preferably less than 10 volume percent of the material of the inner pipe. The glass enclosed bubbles 116 reduces the density of the material and increases the thermal resistance, which thus enhances the insulating properties of the second polymer material, which reduces the heat exchange between the fluid in the intermediate longitudinal lumen 115 and the central longitudinal lumen 105. To optimize the performance of the coaxial geothermal pipe collector 100, while maintain the ability to easily install the geothermal pipe collector in the bore hole, gas filled glass bubbles may be added to the second polymer material as much as possible to increase the thermal resistance of the inner pipe 110, while still maintain a specific weight of the material of the inner pipe exceeding 1 (relative to water), such as the inner pipe 110 sinks when installed in the fluid filled bore hole, such that the inner pipe 110 does not have to be forced into the fluid filled bore hole.

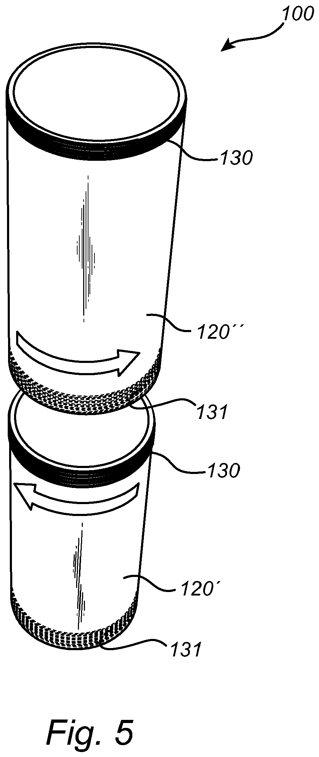

Fig. 5 shows a coaxial geothermal pipe collector system comprising coaxial geothermal pipe collectors 100 according to any of the embodiments herein, and a method of connecting a plurality of outer pipes 120',120" of the coaxial geothermal pipe collectors 100 to each other. The method of connecting a plurality of outer pipes 120',120" of the geothermal pipe collectors 100 to each other comprises providing a first outer pipe 120" into a bore hole and bringing a second outer pipe 120" in abutment with the first outer pipe 120'. The method then comprises rotating the second outer pipe 120" relative the first outer pipe 120', so as to couple the first outer pipe 120' to the second outer pipe 120" by means of two matching threads 130,131. I.e. a first portion of the first outer pipe 120' comprises an outer threaded portion 130 having threads that corresponds to an inner threaded portion 131 of the second outer pipe 120".

The method of connecting the outer pipes 120', 120" to each other may be followed by the method of installing an inner pipe inside of the plurality of connected outer pipes 120',120". The method of installing the inner pipe in the outer pipe 120 could comprise connecting a plurality of inner pipes to form a connected inner pipe or could comprise installing a single inner pipe for example provided on a coil into the outer pipe. In embodiments in which the installation of the inner pipe comprises connecting a plurality of inner pipes, such plurality of inner pipes may comprise threaded portions such that they are connected to each other by means of rotating a first inner pipe in relation to a second inner pipe. I.e. a first portion of the first inner pipe comprises an outer threaded portion having threads that corresponds to an inner threaded portion of the second inner pipe.

In embodiments where the step of installing the inner pipe in the outer pipe comprises installing a single inner pipe provided on a coil, the material of the inner pipe is preferably a material based on a natural or synthetic rubber, such as EPDM, as such material are resilient enough to coil.

The method of connecting a plurality of outer and inner pipes to each other may optionally comprise the step of applying an adhesive to the threaded portions, such that the threaded connection is further supported by adhesive.

The method steps of installing the inner pipe in the outer pipe may comprise installing a spacer between the inner and outer pipes, so as to center the inner pipe in the outer pipe.

The coaxial geothermal pipe collector system may further comprise the fluid for circulation in the coaxial geothermal pipe collector system. The fluid may have a relative density (in relation to water at 4° C, having a density of 1) of above 1,10 for supporting the wall of the outer pipe 120 of the polymer geothermal collector 100, when the coaxial geothermal pipe collector 100 has been installed in the well. Having a high-density fluid may be particularly important in deep bore hole applications, as the pressure from the ground surrounding the bore hole increases with the depth of the bore hole. The fluid for circulation in the geothermal collector could preferably have a relative density to water or specific weight in the interval 1,1 - 1,3. The fluid for circulation in the geothermal collector could for example be the fluid Kilfrost GEO, diluted with water in concentrations in the range 24% - 60%, available from Kilfrost Limited, Albion Works, Haltwhistle, Northumberland NE49 OHJ, UK.

When assembled, the assembled coaxial geothermal pipe collector for transporting the fluid may have a total length of more than 200 meters, preferably more than 300 meters, preferably more than 400 meters, preferably more than 600 meters, preferably more than 800 meters.

The assembled coaxial geothermal pipe collector could be suitable for use in relatively high temperature applications, specifically applications in which a fluid having a temperature of above 80° is used. In such applications the use of a coaxial geothermal pipe collector made from a synthetic rubber, such as EPDM is particularly suitable as the mechanical properties of EPDM does not change very much when heated to a temperature of about 80°C. High temperature applications is specifically advantageous in systems for storing heat in a surrounding ground on the outside of the outer pipe and/or for retrieving stored heat from a surrounding ground on the outside of the outer pipe.

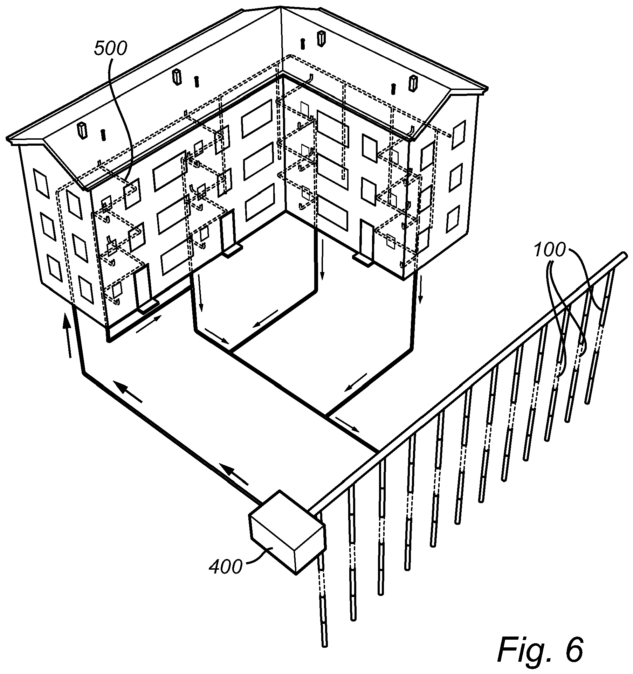

Fig 6 illustrates a building 500 having a heat pump 400 schematically coupled to the house for providing a heating and/or cooling function to the building. The heat pump 400 is fluidly coupled to a coaxial collector system comprising a plurality of geothermal coaxial collectors 100. The total length of each coaxial collector may be at least 200 meters, preferably more than 400 meters, preferably more than 600 meters, preferably more than 800 meters. The length may be different for each of the collectors, depending on the conditions in the ground which the bore is made in. The heat pump may hereby be fluidly coupled to a plurality of coaxial collector assemblies, arranged in different bore holes for increasing the capacity of heat storage and heat retrieval.

## Claims

1. A geothermal pipe collector (1) for transporting a fluid for heat exchange with the ground surrounding a borehole, the geothermal pipe collector (1) comprising:
an outer pipe (120) comprising a fiber reinforced thermoset polymer material, and
an inner pipe (110) being made from a material comprising a second polymer material, different from the fiber reinforced thermoset polymer material, wherein:
the inner pipe (110) is co-axially arranged in the outer pipe (120), such that a central longitudinal lumen (105) for transporting the fluid in a first direction is formed in the inner pipe (110), and an intermediate longitudinal lumen (115) for transporting the fluid in a second direction is formed between the inner and outer pipes (110,120),
the average wall thickness (T1) of the inner pipe (110) is more than 1,1, times the average wall thickness (T2) of the outer pipe (120), and
the outer pipe (120) is adapted to exchange heat with the ground surrounding the borehole, when in use.

2. The geothermal pipe collector (1) according to claim 1, wherein the fiber reinforced thermoset polymer material comprises at least one of an epoxy material or a polyester resin.

3. The geothermal pipe collector (1) according to any one of claims 1 - 2, wherein the fiber reinforced thermoset polymer material comprises at least one of glass fibers and carbon fibers.

4. The geothermal pipe collector (1) according to any one of claims 1 - 3, wherein the second polymer material is more elastic than the fiber reinforced thermoset polymer material.

5. The geothermal pipe collector (1) according to any one of claims 1 - 4, wherein the second polymer material comprises at least one of a PVC-based material, a natural rubber-based material, and a synthetic rubber-based material.

6. The geothermal pipe collector (1) according to any one of claims 1 - 5, wherein the outer pipe (120) has lower thermal resistance than the inner pipe (110).

7. The geothermal pipe collector (1) according to any one of claims 1 - 6 wherein the material of the inner pipe (110) comprises more gas measured in volume percentage than the material of the outer pipe (120).

8. The geothermal pipe collector (1) according to any one of claims 1 - 7, wherein the material of the inner pipe comprises a plurality of volumes of gas enclosed by an enclosing material, which in turn is enclosed by the second polymer material, for increasing the thermal resistance of the second polymer material, and wherein the enclosing material is harder than the second polymer material.

9. The geothermal pipe collector (100) according to any one of claims 8 and 9, wherein the plurality of volumes of gas enclosed by an enclosing material makes up at least 3 volume percent of the material of the inner pipe, more preferably at least 5 volume percent of the material of the inner pipe, and even more preferably at least 10 volume percent of the material of the inner pipe.

10. The geothermal pipe collector (100) according to any of the preceding claims, wherein the inner pipe (110) has a helical groove (122) on the outer surface, facing the outer pipe (120), for creating a turbulent flow of the fluid between the inner and outer pipes, for increasing the heat exchange between the fluid and the outer pipe (120).

11. The geothermal pipe collector (100) according to any of the preceding claims, wherein the central longitudinal lumen (105) has a cross-sectional area in a plane perpendicular to the length extension of the geothermal pipe collector (100) being larger than a cross-sectional area of the intermediate longitudinal lumen (115) in the same plane.

12. The geothermal pipe collector (100) according to claim 11, wherein the wherein the central longitudinal lumen (105) has a cross-sectional area in a plane perpendicular to the length extension of the geothermal pipe collector (100) being more than 1,1 times the size of the cross-sectional area of the intermediate longitudinal lumen (115) in the same plane.

13. A geothermal pipe collector system comprising:
- the geothermal pipe collector according to any one of claims 1 - 12, and
- the fluid for circulation in the geothermal pipe collector, wherein the fluid has a relative density of above 1,10 for supporting the wall of the outer pipe of the polymer geothermal collector (100), when the polymer geothermal collector (100) has been installed in the well.

14. Use of a plurality of geothermal pipe collectors (100, 200A, 200B) according to any one of claims 1 - 12 for forming an assembled coaxial geothermal pipe collector for transporting the fluid, wherein the assembled coaxial geothermal pipe collector has a total length of more than 200 meters, preferably more than 300 meters, preferably more than 400 meters, preferably more than 600 meters, preferably more than 800 meters.

15. A method of installing a coaxial geothermal pipe collector comprising a plurality of outer pipes (120',120") according to any one of claims 1 - 12 and a plurality of inner pipes (110) according to any one of claims 1
- 12, the method comprising:
- providing a first outer pipe (120') into a bore hole,
- bringing a second outer pipe (120") in abutment with the first outer pipe (120'),
- rotating the second outer pipe (120") relative the first outer pipe (120'), so as to couple said first outer pipe (120') to said second outer pipe (120") by means of two matching threads,
- providing an inner pipe (110) into the outer pipe (120) placed in the bore hole,
- providing a second inner pipe (110) in abutment with the first inner pipe (110) into the outer pipe (120) placed in the bore hole, and
- connecting the second inner pipe (110) to the first inner pipe (110) for forming the coaxial collector.
